# EUROPEAN PATENT APPLICATION

(11) **EP 1 693 989 A2**
(43) Date of publication of application: **23.08.2006**
(21) Application number: 06001957.7
(22) Date of filing: 31.01.2006
(51) Int. Cl.: H04L 12/28

(54) **Service framework for home network**

(30) Priority: 16.02.2005 KR 2005012925
(71) Applicant: Samsung Electronics Co., Ltd., Suwon-si, Gyeonggi-Do (KR)
(72) Inventor: Park, In-Ho, Yeongtong-gu Suwon-si Gyenggi-do (KR); Kim, Kyle, Yeongtong-gu Suwon-si Gyeonggi-do (KR); Lee, Sang-Ho, Dongjak-gu Seoul (KR)
(74) Representative: Grünecker, Kinkeldey, Stockmair & Schwanhäusser Anwaltssozietät

(57) **Abstract**

A service framework in a home network for controlling middlewares. A virtual execution environment is provided for home devices as well as middlewares by controlling device profiles, thereby integrally controlling all the home devices.

## Description

### BACKGROUND OF THE INVENTION

### 1. Field of the Invention

Apparatuses and methods consistent with the present invention relate to a home network, and in particular, a structure of a service framework for providing an artificial service and a method for using the same.

### 2. Description of the Related Art:

A home network system is a system which connects PCs, peripheral devices, mobile phones, home appliances and etc. in a home into one network, and controls them. It has been suggested to build a common virtual computing environment using middleware with the home appliances to provide a home network system.

A home network middleware provides an environment which is controlled for allowing a general user to use various devices connected to the home network such that the home network can use existing home appliances without requiring special knowledge regarding their use, and also provides development of various application services of the home network and execution platforms.

That is, the middleware enables communication among many devices in a home network. Until now, Home AV Interoperability (HAVI), Universal Plug and Play (UPnP), Power Line communication (PLC), Jini, and Home Wide Web (HWW) have been suggested as home network middlewares.

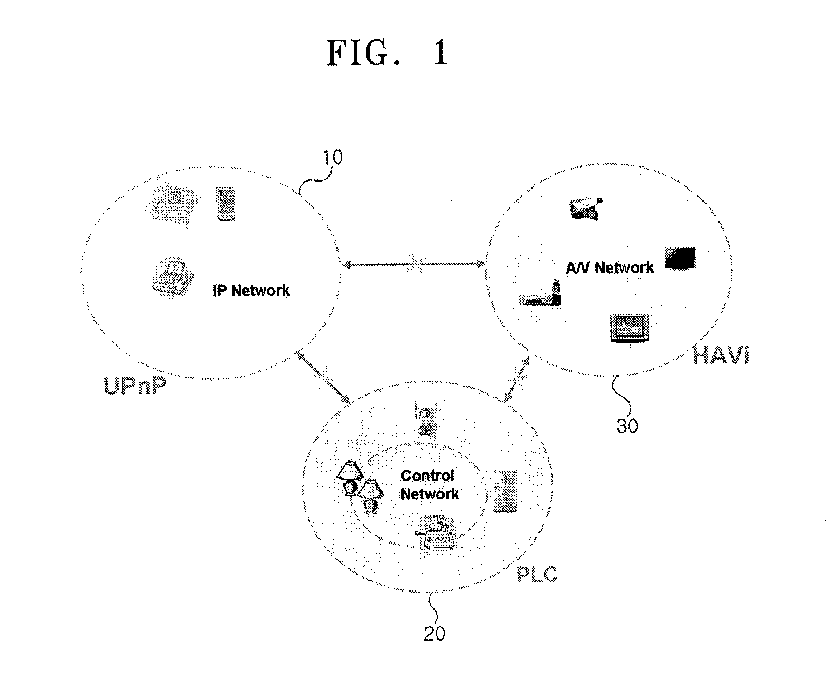

FIG. 1 shows a network system using such a conventional middleware. That is, FIG. 1 shows home devices each of which includes a middleware. An UPnP network 10 is a software technology which can form one network without any additional equipment by expanding a plug-and-play concept for connecting PCs and peripheral devices, when all home appliances as well as the peripheral devices of PCs are arranged in a home at the same time. The UPnP is a middleware for IT devices and has a peer-to-peer architecture.

A PLC network 20 is a technology which forms the most extensive network of the existing infrastructure since the power source lines are provided to all homes. There is, the cost required for forming the network is very low, and when an electrical cord is inserted into the home appliances, the cord and appliances can form a simple network.

A HAVi network 30 is an AV network solution only for the AV devices and uses a communication media which complies with IEEE1394. It is operated as a home networking middleware for controlling image data by using Open Application Programming Interface (API) functions, and has a peer-to-peer architecture.

Jini is a middleware having a client and server architecture using Java. But, Jini devices have a limitation that each device must be provided with JVM (Java Virtual Machine) to be integrated into a network, and therefore it is more suitable for an office environment than a home.

The UPnP network 10 is a solution using a HTTP server and Extensible Markup Language (XML), and cannot be applied to all homes. The HAVi network 30 is not applied to PCs and peripheral devices, and has a limitation in that standards are stipulated only for the upper Open System Interconnection (OSI) layers of the home appliances. Further, it focuses only on the applications and the services, and there is a problem connecting with the Internet since a lower network is limited to IEEE1394.

A common specification is required among the makers which provide the devices that are connected to same network in order to build a home network into a home based PLC network 20. The HAVi network 30 is an AV network solution only for the AV devices using IEEE1394.

As described above, the existing middleware forms an isolated network, and is a limited application domain for communication and recognition between the devices.

Accordingly, since the network which is integrated into one middleware type is not provided, a solution for the integrated network which takes into consideration the features of the home devices is required.

That is, an apparatus and method are required for utilizing information for the entire home environment, and executing in order to generate dynamically various types of intelligent services using the home resources.

SUMMARY OF THE INVENTION

The present invention provides a structure of a service framework and a method thereof which can provide a solution for an integrated network by taking the features of the home devices into consideration, and generate an intelligent service dynamically that can grasp and execute information regarding a home environment using various kinds of services and home resources.

According to an aspect of the invention, there is provided a service framework in a home network including a plurality of controlled devices according to an exemplary embodiment of the present invention is composed of an intelligent service module for providing the intelligent service that is set for using each of the controlled devices, a framework for integrating and supporting the plurality of middlewares, and a switching module for allowing a mutual communication by decoding and creating a message between the intelligent service module, and the framework, such that the framework can control the controlled devices, according to the services that are provided by the service module.

The intelligent service module is designed to monitor the home situations in a real-time basis through an environment sensor, accumulate various environment data, analyze and diagnose the data in a real-time basis, and derive information for driving the controlled devices.

Further, an independent standard interface or Open Application Programming Interface (Open API) may be used when the framework use the functions of the controlled devices.

It may be possible that an application, which is operated by a client of the framework, and includes an User Interface (UI) device for setting access and information about other home networks, is included in order to execute building a profile to the framework and requesting a command.

The framework is designed to include a middleware wrapper for allowing a mutual communication by decoding and generating a message between each of the middlewares and the framework, and thereby the framework controls the controlled devices through the middleware wrapper.

The framework manages a profile of a service, and the controlled devices. The framework further comprises a profile manager which mainly performs creation, correction, deletion and search functions of a profile, a profile registry which forms a mapping table for connection between a real service and a profile structure of a meta data format defined in the framework, and a framework controller which monitors each element of the framework, manages life cycles, and manages states of the installed or uninstalled element. Therefore, if the middleware wrapper receives contents of the service and the controlled devices through the middleware of the controlled devices, and sends them to the framework, the framework controller requests a registration of a profile of the service and the controlled devices to the profile manager, and registers the service list of a profile of the service and the controlled devices to the profile registry.

The middleware may transmit a recognition signal for the transmitted message to the controlled devices when a discovery message is received from the controlled devices through the middleware.

If the profile manager sends the profile to the profile registry, a registration recognition signal is transmitted to the middleware wrapper and the middleware wrapper sends the received recognition signal to the controlled devices once again, and thereby notice is provided that registration of the profile of the controlled devices is completed.

The framework may also manages states and events of the controlled devices and include a service manager which is operated by the controlled devices and a page generator so that the service manager generates the controlled devices and a service page by using the controlled devices and the service list transmitted from the profile registry, and transmits it to the application, if a page of the service and the controlled devices is requested to the application through an Open API.

The framework may further comprise a remote server to which a service object delivery is supplied, and a service delivery framework to which the service object delivery is supplied from the remote server, and if the service delivery framework is provided with the service object delivery, registration of a service object is requested to the framework, and at the same time the framework controller installs and registers the service object.

Further, if there is an error at the same time when the framework analyzes the data by managing and monitoring a log of the controlled devices, a system administrator which can correct the error is included. Therefore, if an uninstall request of the service object is requested from the remote server and the system administrator, it is possible to eliminate the service object by uninstalling the service object.

On the other hand, if the intelligent service module transmits the service list to a switching module, the switching module requests the profile manager to send related service information, the profile manager secures the information of the controlled devices from the profile registry, and requests the middleware to which the controlled devices belong that the controlled devices be operated according to the service contents.

According to an aspect of the invention, there is provided a home network including a framework for integrating and controlling a plurality of middlewares, and a plurality of the controlled devices according to another exemplary embodiment of the present invention, which comprises an intelligent service module for providing the intelligent service that is set for using each of the controlled devices, a profile manager which manages a profile of a service and the controlled services for mainly processing the functions such as creation, correction, deletion and searching of the service profile, a middleware wrapper for allowing a mutual communication by decoding and generating a message between each of the middlewares and the framework, a profile registry which forms a mapping table for connection between a real service and a profile structure of a meta data format defined in the framework, and a switching module for allowing a mutual communication by decoding and creating a message between the intelligent service module, and the framework, and the framework can control the controlled devices, according to the services that are provided by the service module, and wherein if the intelligent service module transmits the service list to the switching module, the switching module requests the profile manager to send related service information, the profile manager secures the information of the controlled devices from the profile registry, and requests the middleware to which the controlled devices belong that the controlled devices be operated according to the service contents.

A service manager which framework manages states and events of the controlled devices and which is operated by the controlled devices and a page generator may be included so that the switching module which secures the information of the controlled devices requests the execution of a service of the controlled devices through the service manager, and the service manager requests the middleware to which the controlled devices belong that the controlled devices be operated according to the service contents.

If the controlled device executes the service contents, the middleware wrapper reports the execution results to the intelligent service module through the service manager and the switching module.

According to an aspect of the invention, there is provided a control method of a home network including a plurality of controlled devices according to an exemplary embodiment of the present invention comprising a service setting step for setting a service so that each of the controlled devices can be used, a framework generating step for generating a framework for integrating and supporting the plurality of middlewares, a switching step for allowing a mutual communication by decoding and creating a message between the intelligent service module, and a step for allowing the framework to control the controlled devices according to the services

The service setting step may monitor the home situations in a real-time basis through an environment sensor, accumulate various environment data, analyze and diagnoses the data in a real-time basis, and derive information for driving the controlled devices.

Further, an independent standard interface (Open API) may be used when the framework uses the functions of the controlled devices.

The framework is characterized in that it is operated by a client of the framework, and builds up a profile and executes a request command. Further, the framework is designed to include a middleware wrapper for allowing a mutual communication by decoding and generating a message between each of the middlewares and the framework, and thereby the framework controls the controlled devices through the middleware wrapper.

The framework generating operation further comprises a step for generating a profile manager which manages the controlled devices and a profile of a service, and mainly performs creation, correction, deletion and search functions of a profile, a step for generating a profile registry which forms a mapping table for connection between a real service and a profile structure of a meta data format defined in the framework, and a step for generating a framework controller which monitors each element of the framework, manages life cycles, and manages states of the installed or uninstalled element. Therefore, if the middleware wrapper receives the contents of the service and the controlled devices through the middleware of the controlled devices, and sends them to the framework, the framework controller requests to the profile manager that the profile of the service and the controlled devices be registered, and the service list of a profile of the service and the controlled devices is registered to the profile registry.

An operation is further included for transmitting a recognition signal for the transmitted message to the controlled devices if the middleware wrapper receives a discovery message from the controlled devices through the middleware.

The control methods may further comprise an operation for transmitting a registration recognition signal to the middle wrapper if the profile manager sends the profile to the profile registry, and an operation for notifying that the registration of the profile of the controlled devices is complete when the middleware wrapper sends the received recognition signal to the controlled devices once again.

The framework generating operation further comprises an operation for generating a service manager which manages states and events of the controlled devices and which is operated by the controlled devices and a page generator, and thereby so that the service manager generates the controlled devices and a service page by using the controlled devices and the service list transmitted from the profile registry, and transmits it to the application, if a page of the service and the controlled devices is requested to the application through an Open API.

Further, the framework generating operation further comprises an operation for allowing a service object delivery to be supplied to the framework through a service delivery framework from a remote server, and if the service delivery framework is provided with the service object delivery, registration of a service object is requested to the framework, and at the same time the framework controller installs and registers the service object.

The service setting operation further comprises an operation for managing and monitoring a log of the controlled devices and a system, analyzing the data, and at the same time for generating a system administrator to solve an error if there is the error, and if an uninstall request of the service object is requested from the remote server and the system administrator, it is possible to eliminate the service object by uninstalling the service object.

The operation for allowing the framework to control the controlled devices according to the services further comprises an operation for requesting the profile manager to send related service information according to the services, an operation for allowing the profile manager to secure the information of the controlled devices from the profile registry, and an operation for requesting the middleware wrapper to which the controlled devices belong that the controlled devices be operated according to the service contents. The middleware may also receive the execution results and transmit them to the intelligent service module if the controlled devices execute the services.

### BRIEF DESCRIPTION OF THE DRAWINGS

The above and/or other aspects of the invention will become more apparent by describing in detail exemplary embodiments with reference to the following drawings in which like reference numerals refer to like elements, and wherein:

FIG. 1 is a view showing schematically a network system using conventional middleware;

FIG. 2 is a view schematically showing a service framework structure for an intelligent type service according to an exemplary embodiment of the present invention;

FIG. 3 is a view showing a detailed structure of a service framework;

FIG. 4 is a view showing a flow for registering each device and a service;

FIG. 5 is a diagram explaining the procedures for generating a list of each device and a service;

FIG. 6 is a view explaining the transmission procedures of a service object using a service delivery framework from a remote server; and

FIG. 7 is a view showing the execution procedures of the intelligent services.

### DETAILED DESCRIPTION OF EXEMPLARY EMBODIMENTS

Exemplary embodiments according to the present invention will be described in detail by referring to the attached drawings.

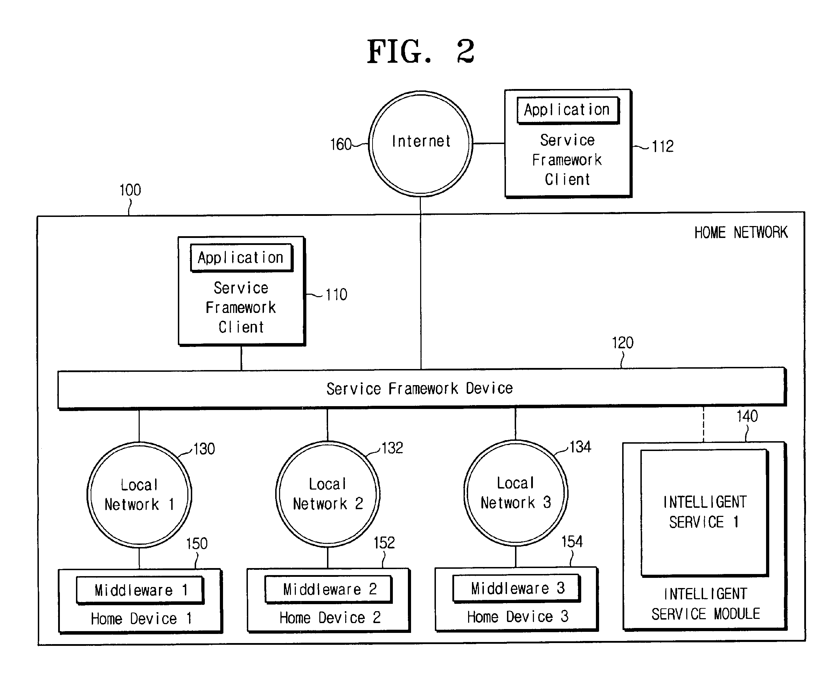

FIG. 2 is a diagram schematically showing a service framework structure for an artificial intelligence type service according to an exemplary embodiment of the present invention.

As is shown, a home network according to an exemplary embodiment of the present invention includes an application 110, a service framework device 120, a plurality of local networks 130, 132, 134, an intelligent service module 140 and home device groups 150, 152, 154, each of which includes middleware.

The application 110 is operated by the service framework client, and includes an UI device having a graphic user interface connected to a home network for setting access and information about other home networks. It is designed to exchange information with a multi-home service application provided to the UI device, build up a profile, and execute request commands.

The local networks 130, 132, 134 are designed such that the home device groups 150, 152, 154, each of which includes the middleware, are connected to each other. At this time, if each of the home device groups 150, 152, 154 is suitable for the middleware type, there are no problems. That is, according to an exemplary embodiment of the present invention, the local networks 130, 132, 134 are characterized in that the operations performed by the same middleware are ensured. Therefore, each of the local networks 130, 132, 134 may be an UPnP network or a PLC network or a HAVi network of FIG. 1.

The intelligent service module 140 is designed to be dynamic, adaptive, prevention-oriented and user-friendly so that a virtual home environment may be used. The intelligent service module 140 accumulates various environment data by monitoring a home situation in a real-time basis using an environment sensor, and derives very useful information for driving the home devices by analyzing and diagnosing in a real-time basis. It is also designed to control the home devices which is very helpful for the users by recognizing circumstance information (location, surrounding noises, tasks, time, schedules, etc.) such as a context aware service (CAS) which changes as time passes. For example, if a visitor presses a doorbell, as soon as the bell is rung, the face of the visitor is transmitted as an image (a multimedia), and the application 110 sends data related to an operation of the door for enabling the home device to be operated at the position where a user is currently sitting.

The service framework device 120 decodes and generates a message about the elements necessary for mutual communication between each of the local networks 130, 132, 134 and the application 110.

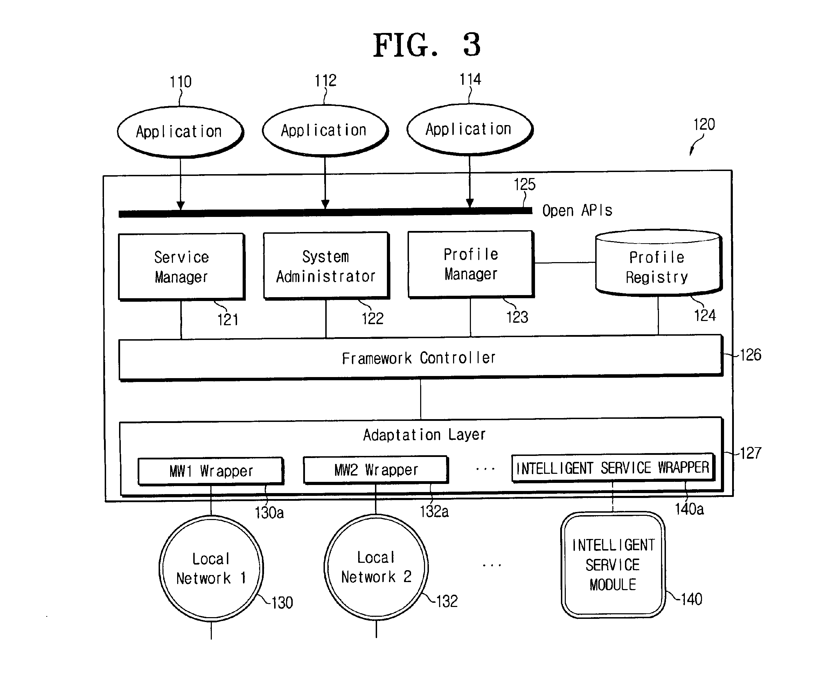

Referring to FIG. 3, the structure of the service framework device 120 will be explained in detail. As is shown, the service framework device 120 includes a service manager 121, a service administrator 122, a profile manager 123, a profile registry 124, a framework controller 126 and an adaptation layer 127.

The service manager 121 performs a function for managing the services which a framework can provide. That is, it manages directly each home device, and also manages states and events of each home device. Further, it operates as a page generator of a home device and a service.

The system administrator 122 analyzes the log data by managing and monitoring the logs of a system and a home device. Further, if there is an error in the framework device, it operates to solve the error.

The profile manager 123 manages a profile of a service, and mainly performs creation, correction, deletion and search functions of a profile. The profile registry 124 forms a mapping table for connection between a real service and a profile structure of a Meta data format defined in the framework.

The framework controller 126 monitors each element of the framework, manages life cycles, and manages states of the installed or uninstalled element. Further, it reports errors to the system administrator 122 when the errors are generated by monitoring the elements of the framework periodically.

The adaptation layer 127 includes a group of wrappers so that a middleware may be used as a constant protocol in the service framework device of the present invention. The wrappers 130a, 132a, 140a of each middleware convert a local network including each middleware for defining an interface between the applications 110, 112, 114 and each element of the network into a communication protocol employing a management information base, and includes a switching module which is a framework interface for realizing an unified network in the service framework device 120. That is, the wrapper 130a, 132a, 140a of each middleware converts a profile format for each local network into a profile format in the service framework device 120, thereby an operation is started. That is, the wrapper converts a profile format in the service framework device 120 into a profile format each local network, thereby an operation is started. Further, in the service framework device 120, an API may be used when a user uses a device function of each local network.

Below, the operations of the service framework device according to an exemplary embodiment of the present invention will be explained by using the above described structure.

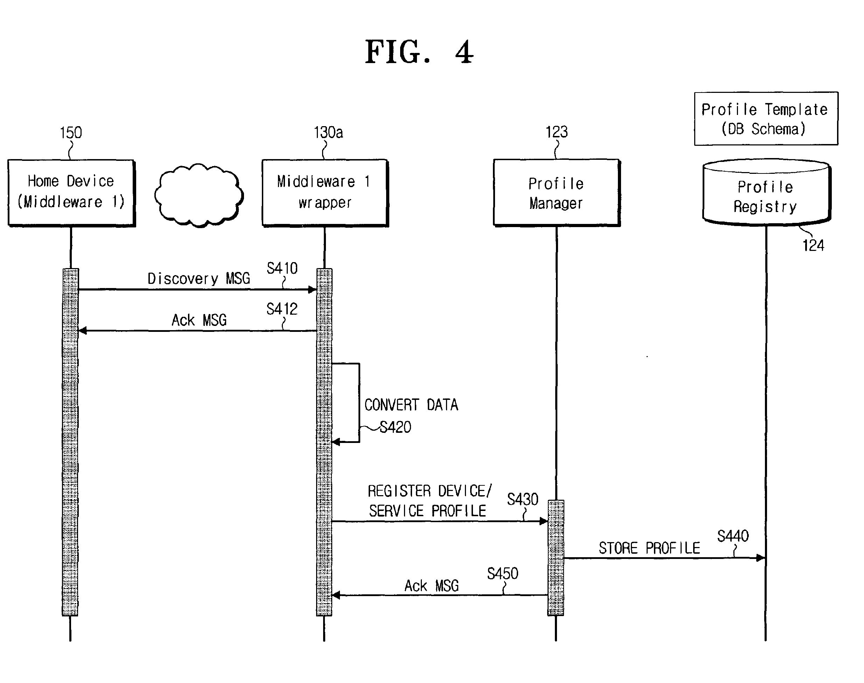

FIG. 4 is a diagram showing a registration process of devices of each local network and the services thereof. For the sake of convenience, in an exemplary embodiment of the present invention, it is assumed that a home device of a middleware 1 of group 150 including an UPnP network of the local network 1 130 is connected to the network. Once the device is connected to the local network 1 130 and an adequate address is designated, a search operation is started, and the service which the device provides is reported to a MW1 wrapper 130a on the network (S410). The main information related to a general device or a service which the device provides includes a type, an identifier, and a pointer of an explanation manual of an XML apparatus.

In the operation S410, the MWi wrapper 130a which receives a search message notifying of a device and a service sends an Acknowledge Message (Ack MSG) about the message (S412), and converts data into a unified profile format in the service framework device 120 (S420).

In connection with the converted data, the framework controller 126 monitors each element of a framework and requests registration of a profile of a device and a service to the profile manager 123 (S430), and the profile manager 123 which receives the request stores the device and the service into the profile registry 124 (S440). Further, the profile manager 123 sends an Ack MSG to the MW1 wrapper 130a (S450).

Further, as described above, in the case that the home device is dismantled as well as the case where a home device of a middleware 1 of group 150 including an UPnP network of the local network 1 130 is connected to the network, the same processes are repeated and uninstall procedures are performed.

If the devices and the services of each network are registered through the above procedures, if necessary, a device or service list created in each application may be requested.

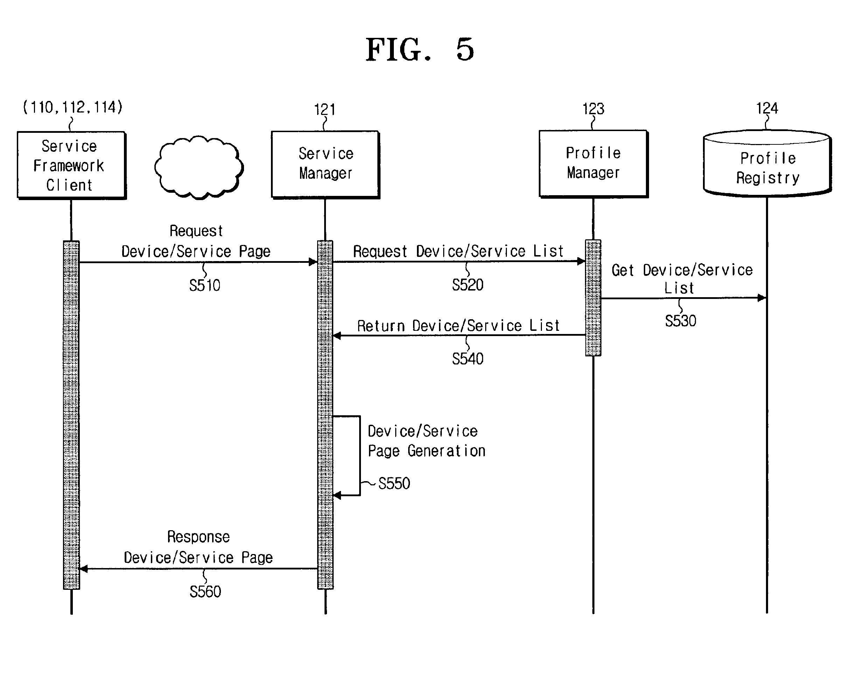

Below, an operation for requesting the device or service list in each application based on a UI operating as a client of a service framework will be explained by referring to the drawings. FIG. 5 is a diagram explaining procedures for generating a list of each device and a service. In each application 110, 112, 114, if a device page or service page is requested through a separate standard interface or Open API 125 provided by the service framework (S510), the service manager 121, a device or service page generator, requests a device or service list from the profile manager 123 (S520).

In the operation S520, the profile manager 123 which receives the request of the device or service list receives the device or service list from the profile registry 124 (S530), and sends it to the service manager 121 (S540).

The service manager 121 generates a device or service page by using the transmitted device or service list (S550), and transmits the page to the client of the service framework (S550). Therefore, the generation process of a device or service list is terminated.

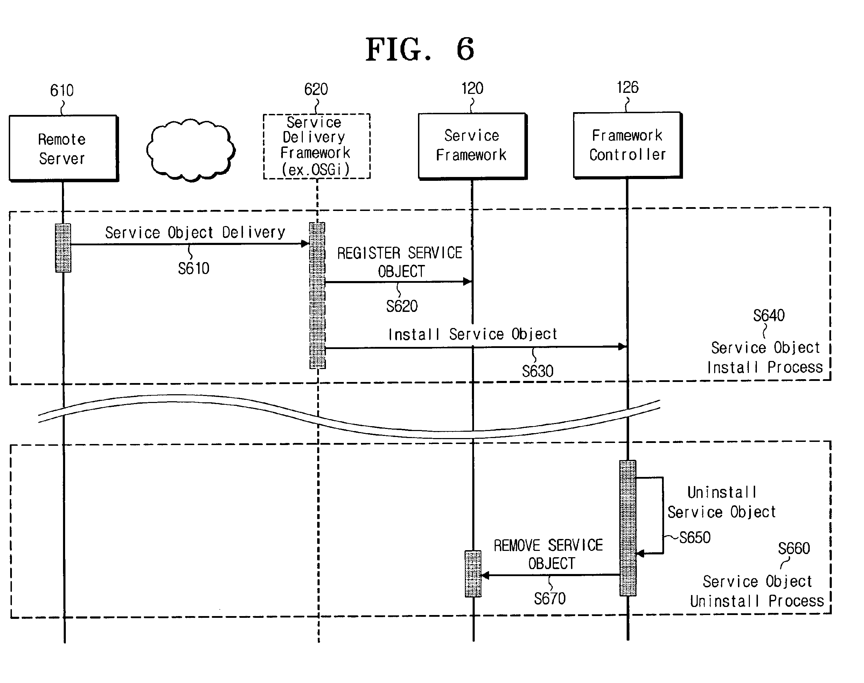

Below, referring to FIG. 6, the procedures through which the service object is transmitted from a remote server through a service delivery framework will be explained.

In an exemplary embodiment of the present invention, the transmission procedures of the service object are explained by using an Open Service Gateway Initiative (OSGi) as a service delivery framework.

That is, FIG. 6 is a diagram explaining that a component delivery and a remote upgrade function using a remote server of an outside network may be provided. First of all, the remote server 610 requests a service object delivery by using a service delivery framework 620, for example, OSGi, (S610).

OSGi is a specification for enabling a new service to be dynamically mounted and operated on a home network device, and is a technology for realizing a remote service delivery by providing a common framework. In the operation S610, if the service delivery framework 620 to which the service object delivery is supplied requests registration of a service object (S620), and at the same time requests installation of the service object to the framework controller 126 (S630), the service object is registered in the service framework (S640).

Further, if the framework controller 126 receives a request for uninstalling the service object from the remote server 610 or the system administrator (S650), the service object uninstall process is executed (S660), and a message that the service object is removed from the service framework 120 is reported (S670).

Next, the procedures through which the intelligent services are performed using the service framework of an exemplary embodiment of the present invention will be explained. For the convenience of explanation, it is assumed that a virtual environment is set for viewing a Digital Video Disc (DVD) at a designated time, and the devices necessary for viewing the DVD such as a DVD, a TV, a curtain, and an illumination device are included into the middleware 2 of the local network 2 132.

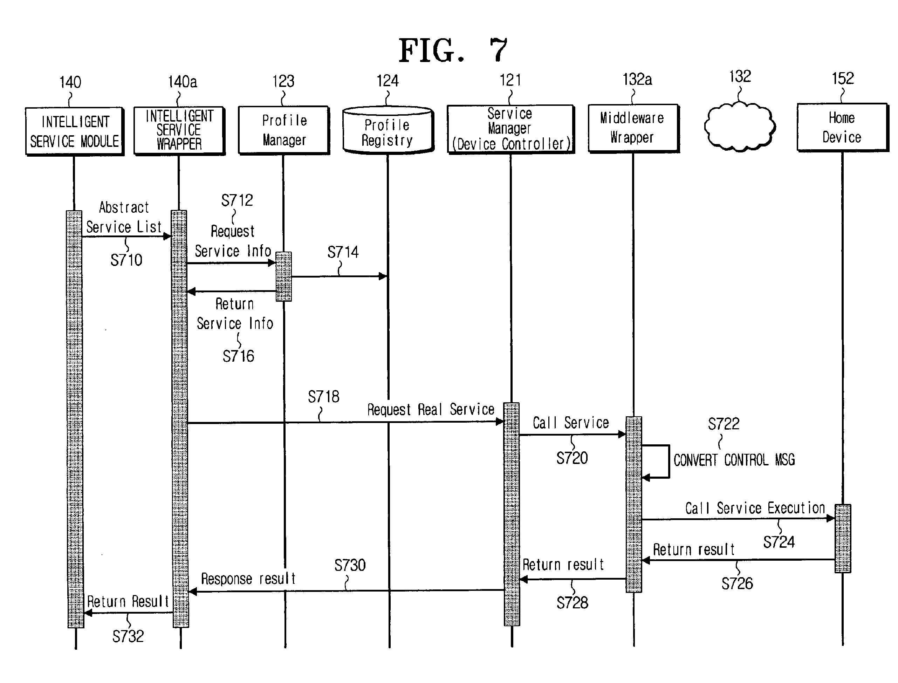

Referring to FIG. 7, the intelligent service module 140 requests related service information from the profile manager 123 of the intelligent service wrapper 140a (S712) if an abstract service list which a user sets is transmitted to the intelligent service wrapper 140a (S710).

That is, in operation S710, as described above, if the designated time for viewing a DVD arrives, the intelligent service module 140 requests information of a device from the intelligent service wrapper 140a, and in the operation S712, the intelligent service wrapper 140a requests information of the device from the profile manager 123 after converting the request into a profile format of the service framework device 120.

In the operation S712, the profile manager 123 which receives a request for the information of the device acquires the information of the device from the profile registry (S714), and sends it to the intelligent service wrapper 140a (S716).

The intelligent service wrapper 140a receives information pertaining to the local network into which the devices necessary for viewing the DVD such as a DVD, a TV, a curtain, and an illumination device are included from the profile manager 123.

Then, the intelligent service wrapper 140a requests the service manager 121 operating as a controller of each device to lower the curtain included into the middleware 2 of the local network 2 132, for viewing the DVD (S718). Then, the service manager 121 requests the MW2 wrapper 132a to lower the curtain (S720).

In the operation S720, the MW2 wrapper 132a which receives a request for lowering the curtain converts the profile format of the service framework device 120 into a profile format of the local network 132 (S722), and requests the home device 152 to lower the curtain (S724).

In the operation S724, the home device 152 which receives the service request reports the execution result to the MW2 wrapper 132a (S726), and the MW2 wrapper 132a sends the result to the service manager once again (S728). The service manager 121 sends the result to the intelligent service wrapper 140a which requests the service (S730).

In the operation S730, the intelligent service wrapper 140a which receives the requested service results executes a series of intelligent services by sending the execution results for the requested service to the intelligent service module 140 (S732).

If the first operation for lowering the curtain in order to view a DVD through above-mentioned procedures is completed, the intelligent service wrapper 140a requests a service providing the illumination suitable for DVD viewing to regulate the illumination, and requests a service to turn on the TV once again.

In this way, if setting a surrounding environment necessary for viewing a DVD is completed, the user turns on the TV for viewing.

In the above descriptions, DVD viewing is explained as an example for the sake of convenience, but it is natural that the home devices belonging to the different local networks can be controlled.

As described above, according to the present invention, the operations may performed by incorporating a new middleware module into the framework at the necessary time by using the framework interface using a converter function for converting information through the middleware interface to which each home device belongs. The new middleware module may be different than existing middleware modules.

As described above, if the service framework of the homework network service according to the exemplary embodiments of the present invention are used, it is possible to provide a virtual home environment (execution environment) for middleware-to-middleware, and to all of the home resources, and thereby integrated management can be realized by managing the device profiles having different structures in an integrated way.

Although exemplary embodiments of the present invention has been described, it will be understood by those skilled in the art that the present invention should not be limited to the described exemplary embodiments, but various changes and modifications can be made within the spirit and scope of the present invention as defined by the appended claims.

## Claims

1. A service framework in a network including a plurality of controlled devices, the service framework comprising:
an service module which provides a service for using the controlled devices;
a framework which supports a plurality of middlewares; and
a switching module which decodes and creates a message sent between the service module and the framework,
wherein the framework controls the controlled devices in accordance with the service provided by the service module.

2. The service framework according to claim 1, wherein the service module is configured to monitor in a real-time basis through an environment sensor, accumulate various environment data, analyze and diagnose the data in a real-time basis, and derive information which drives the controlled devices.

3. The service framework according to claim 1, wherein an independent standard interface is used if the framework uses the functions of the controlled devices.

4. The service framework according to claim 1, wherein an application which is operated by a client of the framework may be included in order to provide a profile to the framework and a request command, the application including a user interface device for setting information.

5. The service framework according to claim 4, wherein the framework comprises a middleware wrapper which decodes and generates a message between each of the middlewares and the framework, so that the framework controls the controlled devices through the middleware wrapper.

6. The service framework according to claim 5, wherein the framework comprises:
a profile manager which performs at least one of creation, correction, deletion and search functions of a profile;
a profile registry which forms a mapping table which correlates the service and a profile structure of a Meta data format defined in the framework; and
a framework controller which, at least one of, monitors each element of the framework, manages life cycles, manages states of an installed element, and manages states of an uninstalled element,
wherein if the middleware wrapper receives contents of the service and the controlled devices through the middleware of the controlled devices, and sends them to the framework, the framework controller requests registration of a service profile and the controlled devices from the profile manager, and registers a service list of the service profile and the controlled devices with the profile registry.

7. The service framework according to claim 6, wherein the middleware transmits a recognition signal to the controlled devices if a discovery message is received from the controlled devices through the middleware.

8. The service framework according to claim 6, wherein if the profile manager registers the profile to the profile registry, a registration recognition signal is transmitted to the middle wrapper, and the middle wrapper sends the recognition signal to the controlled devices once again, and thereby a notice is provided that registration of the profile of the controlled devices is complete.

9. The service framework according to claim 6, wherein the framework comprises a service manager which manages the controlled devices and serves as a page generator so that the service manager generates a service page by using the service list transmitted from the profile registry, and transmits the service page to the application, if a service page of the service is requested.

10. The service framework according to claim 6, wherein the framework further comprises:
a remote server to which a service object delivery is supplied; and
a service delivery framework to which the service object delivery is supplied from the remote server,
wherein if the service delivery framework is provided with the service object delivery, registration of a service object is requested, and the framework controller installs and registers the service object.

11. The service framework according to claim 10, wherein the framework further comprises a system administrator which, at least one of, manages a log of the controlled devices, analyzes data, and solves an error if an error occurs in the framework, wherein if an uninstall request of the service object is requested from the remote server and the system administrator, it is possible to eliminate the service object by uninstalling the service object.

12. The service framework according to claim 6, wherein if the service module transmits the service list to the switching module, the switching module requests the profile manager to send service information, the profile manager secures the information of the controlled devices from the profile registry, and requests the middleware to which the controlled devices belong that the controlled devices be operated according to the service information.

13. A service framework in a network including a plurality of controlled devices, the service framework comprising:
a service module which provides a service to use the controlled devices;
a profile manager which manages a service profile so as to, at least one of, correct, delete and search the service profile;
a middleware wrapper which decodes and generates a message between the middlewares and the framework;
a profile registry which forms a mapping table for connection between the service and a profile structure of a Meta data format defined in the framework; and
a switching module which decodes and creates a message between the service module and the framework,
wherein the framework controls the controlled devices, according to the service that is provided by the service module, and wherein if the service module transmits the service list to the switching module, the switching module requests the profile manager to send related service information, the profile manager secures the information of the controlled devices from the profile registry, and send a request to the middleware to which the controlled devices belong that the controlled devices be operated according to the service information.

14. The service framework according to claim 13, further including a service manager which manages the controlled devices, wherein the switching module requests execution of the service of the controlled devices through the service manager, and the service manager requests the middleware to operate the controlled devices.

15. The service framework according to claim 14, wherein the middleware wrapper informs the service module that the controlled devices have executed the service.

16. A method for controlling a framework in a network including a plurality of controlled devices, the method comprising:
setting a service for each of the controlled devices to use;
generating a framework for integrating and supporting a plurality of middlewares;
decoding and creating a message between the intelligent service module and the framework; and
allowing the framework to control the controlled devices according to the service for each of the controlled devices.

17. The method according to claim 16, wherein the operation of setting a service, at least one of, monitors situations in a real-time basis through an environment sensor, accumulates various environment data, analyzes and diagnoses the data in a real-time basis, and derives information which drives the controlled devices.

18. The method according to claim 16, wherein an independent standard interface is used if the framework uses the functions of the controlled devices.

19. The method according to claim 16, wherein the framework acts as a client server and builds a profile and executes a request command through an application composed of a user interface device so as to make access to other networks.

20. The method according to claim 19, wherein the framework comprises a middleware wrapper which decodes and generates a message between middleware of the controlled devices and the framework, and thereby the framework controls the controlled devices through the middleware wrapper.

21. The method according to claim 20, further comprising:
generating a profile manager which manages the controlled devices and a service profile, and performs, at least one of, creation, correction, deletion and search functions of the profile;
generating a profile registry which forms a mapping table for connection between the service and a profile structure of a meta data format defined in the framework; and
generating a framework controller which, at least one of, monitors elements of the framework, manages life cycles, manages states of an installed element, and manages states of an uninstalled element, so that if the middleware wrapper receives contents of the service through the middleware of the controlled devices, and sends the contents to the framework, the framework controller requests the profile manager to register the service profile and the controlled devices in the profile registry.

22. The method according to claim 21, further including transmitting a recognition signal for the transmitted message to the controlled devices if the middleware wrapper receives a discovery message from the controlled devices through the middleware.

23. The method according to claim 21, further comprising:
transmitting a registration recognition signal to the middle wrapper if the profile manager sends the profile to the profile registry; and
notifying that registration of the profile is complete if the middle wrapper sends the recognition signal to the controlled devices once again.

24. The method according to claim 21, further comprising: generating a service manager which manages the controlled devices by using the service list transmitted from the profile registry.

25. The method according to claim 21, further comprising:
allowing a service object delivery to be supplied to the framework through a service delivery framework from a remote server, and if the service delivery framework is provided with the service object delivery, requesting registration of a service object, and installing and registering the service object by the framework controller.

26. The method according to claim 25, further comprising, at least one of, managing a log of the controlled devices, analyzing data, and generating a system administrator to solve an error if there is an error, and if an uninstall request of the service object is made, eliminating the service object by uninstalling the service object.

27. The method according to claim 21, further comprising:
requesting the profile manager to send related service information;
allowing the profile manager to secure information of the controlled devices from the profile registry; and
requesting the middleware wrapper, to which the controlled devices belong, to operate the controlled devices according to the service information.

28. The method according to claim 27, wherein the middleware receives execution results and transmits the execution results to an intelligent service module if the controlled devices execute the service.
